# EUROPEAN PATENT APPLICATION

(11) **EP 2 194 521 A1**
(43) Date of publication of application: **09.06.2010**
(21) Application number: 08834642.4
(22) Date of filing: 25.09.2008
(51) Int. Cl.: G09F 21/04, G01C 21/00, G06Q 30/00, G08G 1/0969, G09F 19/00, H04B 7/26

(54) **ADVERTISEMENT DISTRIBUTING SYSTEM AND VEHICLE-MOUNTED DEVICE**

(30) Priority: 28.09.2007 JP 2007254011
(71) Applicant: Kabushiki Kaisha Kenwood, Hachiouji-shi, Tokyo 192-8525 (JP)
(72) Inventor: HOTTA, Nobuyuki, Hachiouji-shi Tokyo 193-0834 (JP); KUGA, Kouji, Sagamihara-shi Kanagawa 229-1105 (JP); SHIMOSHIMANO, Hideo, Hachiouji-shi Tokyo 192-0907 (JP)
(74) Representative: Leinweber & Zimmermann
(86) International application number: PCT/JP2008/067228
(87) International publication number: WO 2009/041458

(57) **Abstract**

An advertisement distributing system and a vehicle-mounted device that are able to give or acquire some benefits for viewing advertisement information. The advertisement distributing system comprises vehicle-mounted devices (10), roadside apparatuses (20) and a center apparatus (30). Each vehicle-mounted device (10) includes a communication part (3b); a storing part (3c) for storing advertisement viewing history information as to whether to have viewed advertisement information; and a control part (4) that causes the communication part (3b) to transmit the advertisement viewing history information toward the center apparatus (30). The center apparatus (30) includes a communication part (35); a storing part (34) that stores the advertisement viewing history information in association with the vehicle-mounted device (10) mounted on each of target vehicles (C); and a control part (31) that produces, based on the advertisement viewing history information, benefit notifying information about benefits given for viewing the advertisement information and causes the communication part (35) to transmit the produced benefit notifying information toward the vehicle-mounted devices (10).

## Description

### TECHNICAL FIELD

The present invention relates to an advertisement distributing system and vehicle-mounted device.

### BACKGROUND ART

At present, a car navigation system, where an ITS (Intelligent Transport System) vehicle-mounted device comprising a navigation device is mounted on a vehicle, provides various services including ETC (Electronic Toll Collection system) and the VICS (Vehicle Information and Communication System).

In recent years, a wireless communication system referred to as DSRC (Dedicated Short-Range Communication) has been adopted, thereby attempting to provide various services. In terms of providing such services, it is premised that a roadside apparatus capable of DSRC connection and a center apparatus can communicate with each other via a network.

The roadside apparatus is disposed at each of prescribed points, and communicates with the vehicle-mounted device via the DSRC connection. On this occasion, the vehicle-mounted device transmits uplink information, which has preliminarily been produced, to the roadside apparatus.

The center apparatus provides the vehicle-mounted device with required services on the basis of uplink information received via the roadside apparatus. The services here include, for example, an advertisement distributing service. As will be described later, the uplink information includes unique information varying among the vehicle-mounted devices.

The advertisement distributing service in the DSRC can display advertisement information closely related to local areas on the screen of the vehicle-mounted device in real time. The information closely related to local areas can be distributed because the service provided by the center apparatus is based on the uplink information transmitted from the vehicle-mounted device. The distributable information includes, for example, information on restaurants and parking lots near the target vehicle. Such an advertisement distributing service using the DSRC allows a user to view only required advertisement information appropriate to the target vehicle (see Patent Documents 1 and 2).

Patent Document 1: Japanese Patent Application Laid-Open No. 2001-101578.

Patent Document 2: Japanese Patent Application Laid-Open No. 2004-279509.

### DISCLOSURE OF THE INVENTION

### PROBLEMS TO BE SOLVED BY THE INVENTION

However, according to the aforementioned advertisement distributing service, there is only a little merit of user for viewing the distributed information itself. More specifically, even if the user having viewed the advertisement comes to the store introduced in the advertisement, there is no benefit to be given. Accordingly, even if the vehicle-mounted device receives the advertisement information, it may be considered that the user does not necessarily view it.

The aforementioned advertisement distributing service does not utilize the characteristics of the DSRC capable of distributing information with respect to each vehicle-mounted device, and has no particular difference if compared with region-specific ordinary commercials. Thus, it may be considered that the user does not intend to receive the advertisement distributing service to be provided via the DSRC.

It is an object of the present invention to provide an advertisement distributing system and a vehicle-mounted device which are able to give or acquire some benefits for viewing the advertisement information.

### PROBLEMS TO BE SOLVED BY THE INVENTION

A first aspect of the present invention provides an advertisement distributing system in which a vehicle-mounted device is mounted on each of one or more vehicles and connected to a center apparatus for distributing advertisement information, via a roadside apparatus in a manner capable of making wireless communication,
wherein the vehicle-mounted device comprises:
first communication means for communicating with the center apparatus via the roadside apparatus; first storage means for storing advertisement viewing history information as to whether the advertisement information has been viewed or not; and first control means for reading the advertisement viewing history information from the first storage means and causing the first communication means to transmit the information to the center apparatus; and
the center apparatus comprises:
   second communication means for communicating with the vehicle-mounted device via the roadside apparatus; second storage means for storing the advertisement viewing history information in association with each vehicle-mounted device mounted on the vehicle; and second control means for producing benefit notifying information for notifying a benefit to be given for viewing the advertisement information on the basis of the advertisement viewing history information read from the second storage means and causing the second communication means to transmit the produced benefit notifying information to the vehicle-mounted device.

In the advertisement distributing system according to the present invention, the vehicle-mounted device comprises display means, and the first control means causes the display means to display the benefit notifying information transmitted from the center apparatus.

In the advertisement distributing system according to the present invention, the second control means determines benefit contents of the benefit notifying information according to whether the advertisement information has been viewed or not included in the advertisement viewing history information.

In the advertisement distributing system according to the present invention, the second control means includes ciphered information indicating benefit contents in the benefit notifying information.

In the advertisement distributing system according to the present invention, the second control means includes a discrimination number for discriminating the vehicle-mounted device in the benefit notifying information.

A further aspect of the present invention provides a vehicle-mounted device connected to a center apparatus for distributing advertisement information, via a roadside apparatus in a manner capable of making wireless communication, the vehicle-mounted device comprising:
communication means for communicating with the center apparatus via the roadside apparatus;
storage means for storing advertisement viewing history information as to whether the advertisement information has been viewed or not; and
control means for reading the advertisement viewing history information from the storage means and causing the communication means to transmit the information to the center apparatus.

### EFFECTS OF THE INVENTION

According to the present invention, the center apparatus can produce benefit notifying information with respect to each vehicle-mounted device on the basis of the advertisement viewing history information transmitted from the vehicle-mounted device, and distribute this information to the vehicle-mounted device. On the other hand, the vehicle-mounted device can acquire the benefit notifying information produced by the center apparatus. Addition of the benefit for viewing the advertisement information to the user differentiates the distribution from ordinal commercial distribution, thereby encouraging the user to view the advertisement information.

### BRIEF DESCRIPTION OF THE DRAWINGS

FIG. 1 is an overall configuration diagram showing an example of an advertisement distributing system;
FIG. 2 is a diagram showing an example of a basic configuration of DSRC communication;
FIG. 3 is a functional block diagram of a vehicle-mounted device;
FIG. 4 is a diagram showing an example of a data configuration of uplink information;
FIG. 5 is a functional block diagram of a center apparatus;
FIG. 6 is a flowchart illustrating processing operation of the entire advertisement distributing system;
FIG. 7 is a flowchart illustrating a process of transmitting benefit notifying information performed by a center apparatus; and
FIG. 8 is a flowchart illustrating a process of transmitting benefit notifying information performed by the vehicle-mounted device.

### DESCRIPTION OF SYMBOLS

- 100: advertisement distributing system
- 10: vehicle-mounted device
- 20: roadside apparatus
- 30: center apparatus
- 1: car navigation unit
- 2: VICS module
- 3: DSRC unit
- 4, 31: control unit
- C: target vehicle

### BEST MODES FOR CARRYING OUT THE INVENTION

The configuration and operation of a most preferred embodiment of a vehicle-mounted device according to the present invention will hereinafter be described in detail with reference to the drawings.

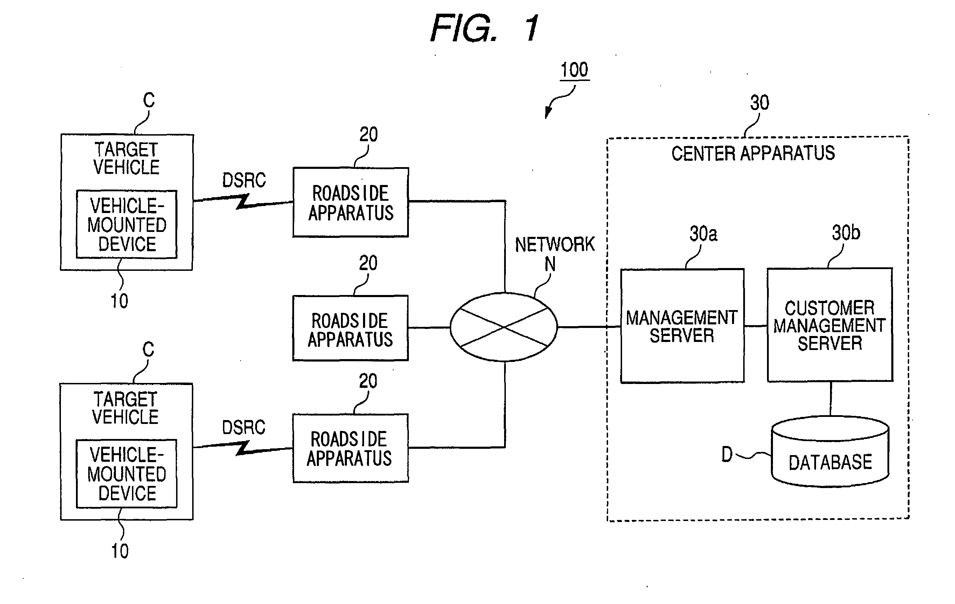

FIG. 1 shows the overall diagram of the advertisement distributing system 100 of this embodiment.

The advertisement distributing system 100 comprises a vehicle-mounted device 10, a roadside apparatus 20 and a center apparatus 30.

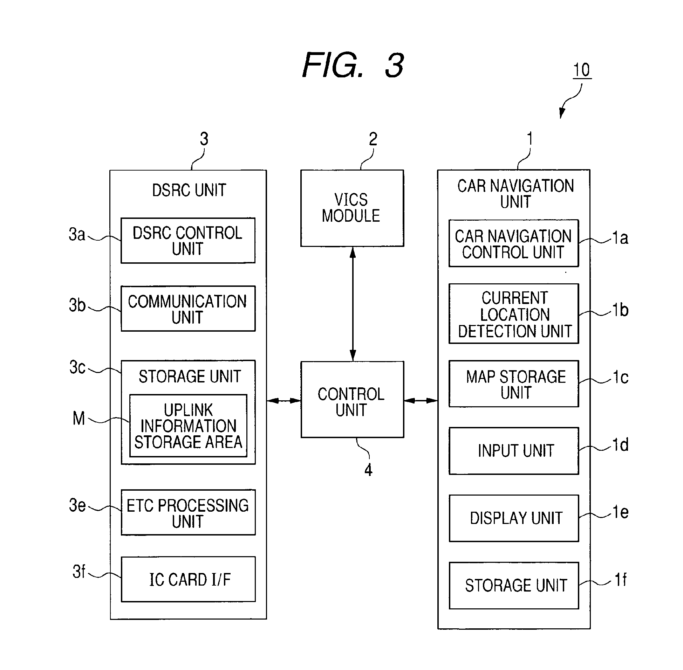

The vehicle-mounted device 10 includes a car navigation unit and a DSRC unit (see FIG. 3) and installed at a prescribed position in a target vehicle C.

The car navigation unit can receive services such as VICS mainly via three media, which are an FM multiplex broadcast, an optical beacon and a radio beacon. Up to the present, the services have been provided such that various pieces of information are unidirectionally received by the vehicle-mounted device 10 with respect to each of these media.

On the other hand, the DSRC unit is capable of active type two-way communication using the 5.8 GHz band, which is for example used in ETC.

The roadside apparatuses 20 are disposed on roads and in parking lots, and communicate in a two-way with the DSRC unit of the vehicle-mounted device 10 using the 5.8 GHz band. The communication distance is reduced to several meters to several tens of meters to reduce the radii of cells, thereby allowing reliable communication with each of the vehicle-mounted devices 10.

This, for example, prevents the roadside apparatus 20 from receiving a radio wave from the DSRC unit of a vehicle other than that passing through a tollgate on a turnpike to interfere with correct billing.

Further, the same 5.8 GHz band is used in every small sector, thereby effectively utilizing frequency resources. Moreover, services closely related to places where users are, such as local information and meteorological information, can be provided.

The center apparatus 30 stores information to provide for the vehicle-mounted device 10. The center apparatus 30 is connected with the roadside apparatus 20 via a network N. When the vehicle-mounted device 10 and the roadside apparatus 20 initiate two-way communication with each other via the DSRC, the center apparatus 30 is notified of initiation of connection by the roadside apparatus 20. The center apparatus 30 transmits required information requested by the vehicle-mounted device 10 to the roadside apparatus 20. The vehicle-mounted device 10 then receives this information.

The center apparatus 30 comprises a management server 30a and a customer management server 30b.

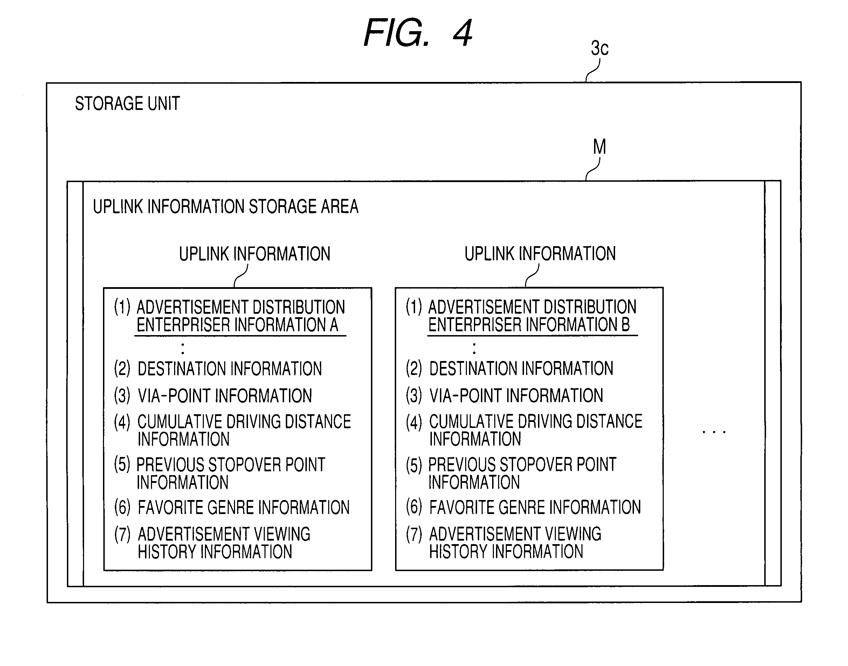

The management server 30a manages uplink information including advertisement viewing history information (see FIG. 4) transmitted from the vehicle-mounted device 10, and transmits required uplink information to the customer management server 30b.

The customer management server 30b is disposed on a store-by-store basis, produces required advertisement information according to contract contents of a user on the basis of the uplink information received from the management server 30a, and transmits this information to the vehicle-mounted device 10.

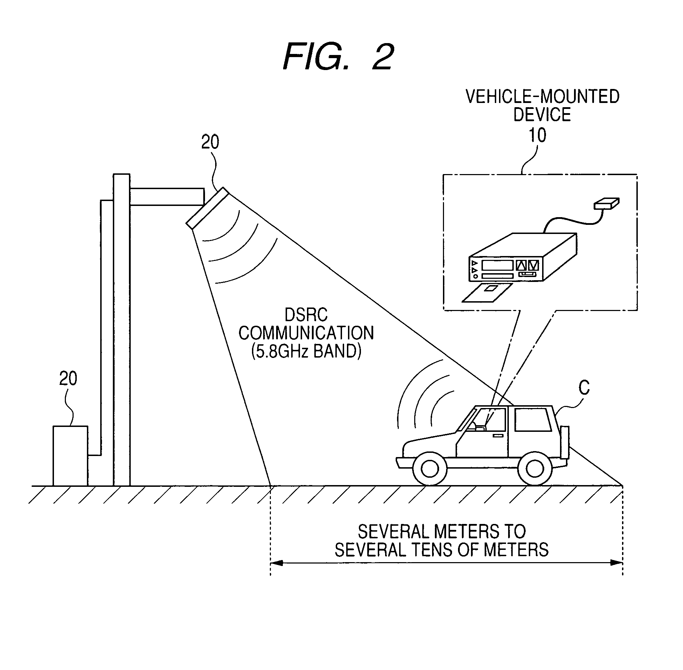

FIG. 2 shows an example of a basic configuration of the DSRC communication between the vehicle-mounted device 10 and the roadside apparatus 20.

In the case here, the target vehicle C, which includes the vehicle-mounted device 10, is traveling in a low speed or stopped in order to cause the center apparatus 30 and the vehicle-mounted device 10 to communicate with each other in a one-to-one correspondence. When the target vehicle C is in an area capable of communicating with the roadside apparatus 20, the roadside apparatus 20 initiates two-way wireless communication with the vehicle-mounted device 10. The area capable of communicating is a region whose cell radius is about several meters to several tens of meters, as described above.

FIG. 3 shows a functional block diagram of the vehicle-mounted device 10.

If viewed broadly, the vehicle-mounted device 10 comprises a car navigation unit 1, a VICS module 2, a DSRC unit 3 and a control unit 4. Typically, these may collectively be referred to as an ITS vehicle-mounted device.

The car navigation unit 1 mainly comprises a car navigation control unit 1a, a current location detection unit 1b, a map storage unit 1c, an input unit 1d, a display unit 1e and storage unit 1f.

The car navigation control unit 1a receives the current location of the target vehicle C outputted from the current location detection unit 1b. The car navigation control unit 1a matches the location to the geometry of roads in map data outputted from the map storage unit 1c, and causes the display unit 1e to display a map screen and a current own vehicle mark. The control unit 1a, while displaying the own vehicle mark, performs route guidance to a destination set by the user. The destination may arbitrarily be inputted by the user via an input unit 1d, which will be described later.

The input unit 1d includes hard key buttons such as various keys for inputting designation on navigation operations and keys for instructions of switching audio menu displays, and outputs operation signals according to these key operations to the car navigation control unit 1a.

The display unit 1e comprises a monitor and/or a touch panel. The display unit 1e comprises an LCD (Liquid Crystal Display) or the like, and performs a display process according to display signals inputted from the car navigation control unit 1a.

The storage unit 1f comprises a recording medium preliminary stored with programs, data and the like. The storage unit 1f stores various control programs performed by the car navigation control unit 1a and data used when these control programs are performed, on the recording medium.

The VICS module 2 mainly comprises a module having three VICS functions, and receives congestion information and emergency information. The three VICS functions are an optical beacon via optical communication, an FM multiplex broadcast via FM communication and a radio beacon via wireless communication.

The optical beacon receives information providing services on ordinary roads using infrared rays. Since the maximum communication distance of 3.5 m is short, individual information can separately be received on a lane-by-lane basis. This can also be used for two-way communication. The optical beacons are managed by the National Police Agency.

The FM multiplex broadcast can be received at any place where radio waves from local FM broadcasting stations can be received.

The radio beacon uses radio waves in the 2.4 GHz band and mainly receives information providing services on turnpikes. The maximum communication distance is about 70 m and the data transmission speed of 64 kbit/s is low. (There is a plan to shift the frequency band used for the radio beacon from 2.4 GHz band to 5.8 GHz band and integrate it with the DSRC after the fiscal year 2007.) Use of the DSRC increases the data transmission speed to 4 Mbit/s and enables two-way communication.

The DSRC unit 3 comprises a DSRC control unit 3a, a communication unit 3b, a storage unit 3c, ETC processing unit 3e and an IC card I/F unit 3f.

The DSRC control unit 3a performs centralized control by cooperation with various control programs stored in the storage unit 3c of controlling each element of the DSRC unit 3 and controlling communication and the like. The DSRC control unit 3a stores the uplink information, which will be described later, in the storage unit 3c. The DSRC control unit 3a transmits the uplink information to the roadside apparatus 20 via the communication unit 3b.

The communication unit 3b comprises an aerial wire unit, which is not shown, and receives RF (Radiology Frequency) signals in the frequency band of 5.8 GHz. The communication unit 3b demodulates the received RF signals and transmits the signals to the DSRC control unit 3a. On the other hand, the communication unit 3b receives data transmitted from the DSRC control unit 3a and outputs the data via the aerial wire unit. The outputted data is to be transmitted to the roadside apparatus 20.

The storage unit 3c comprises a recording medium preliminary stored with various programs, data and the like. The storage unit 3c stores various control programs to be performed by the DSRC control unit 3a and data used when these control programs are performed.

The storage unit 3c includes an uplink information storage area M.

Here, uplink information stored in the uplink information storage area M will be described with reference to FIG. 4.

The uplink information storage area M is stored with various pieces of information on (1) advertisement distribution enterpriser information, (2) destination information, (3) via-point information, (4) cumulative driving distance information, (5) previous stopover point information, (6) favorite genre information, and (7) advertisement viewing history information. In a following description, the control unit 4 produces this information as uplink information, and stores the information in the uplink information storage area M. However, without any restriction thereto, the car navigation control unit 1a or the DSRC control unit 3a may each store the information in the uplink information storage area M.

The pieces of information configuring the uplink information will be described hereinafter. Each piece of information, to be described below, may be capable of being individually set via the input unit 1d by the user whether or not each piece is produced as the uplink information and stored.
(1) The advertisement distribution enterpriser information is identification information for identifying an advertisement distribution enterpriser that provides the information providing service. In a case where the user contracts with a plurality of advertisement distribution enterprisers, the uplink information of (2)-(7) is stored in the uplink information storage area M with respect to each advertisement distribution enterpriser. In FIG. 4, the uplink information of (2)-(7) is stored in each of advertisement distribution enterpriser information A and advertisement distribution enterpriser information B.
(2) The destination information is latitude and longitude information at the destination set in the car navigation unit 1, and information on travel of the target vehicle C.
(3) The via-point information is latitude and longitude information at points, e.g. five points at the maximum, set in the car navigation unit 1. The information is also on the travel of the target vehicle C, as with (2).
   The user can view information distributed on the basis of information of (2) and (3) through the display unit 1e. This allows the user to view various pieces of information on the destination and its vicinity and via-points and their vicinities up to the destination.
(4) The cumulative driving distance information is on the cumulative driving distance of the target vehicle C mounted with the vehicle-mounted device 10.
   The control unit 4 stores the cumulative driving distance having been stored in the car navigation unit 1 as the uplink information. This allows the user to view, for example, information on gas stations through the display unit 1e. If the information of (4) is combined with the information of (2) and (3) and the user allowed to view information distributed on the basis of the combined information, the user can view information on the gas stations at the destination and its vicinity and via-points and their vicinities.
(5) The previous stopover point information is that storing latitude, longitude and time information of the target vehicle C, e.g. at 128 points at the maximum, when the power supply of the vehicle-mounted device 10 has been terminated. When the previous stopover point information, which the DSRC control unit 3a stores until transmitting the uplink information to the roadside apparatus 20, becomes that on 128 points or more, the previous stopover point information is overwritten from its older part. After transmission to the roadside apparatus 20, the previous stopover point information is reset. The timing when the DSRC control unit 3a writes the previous stopover point information as the uplink information into the storage unit 3c is not restricted to that immediately before the power supply is terminated. Instead, the timing may be that immediately after the power supply is turned ON. This information is to be stored as information on the travel of the target vehicle C, in the uplink information storage area M. A part of this information is also used as (7) the advertisement viewing history information, which will be described later.
(6) The favorite genre information can be inputted by the user via the input unit 1d with respect to the favorite genre, and is on information desired to be distributed. The control unit 4 stores the inputted favorite genre information in the uplink information storage area M. The control unit 4 then performs control so as not to permit reception of advertisement information other than the favorite genre information among information transmitted from the roadside apparatus 20.
   Accordingly, the user can be kept away from viewing unnecessary advertisement information. On the other hand, the advertisement distribution enterprisers can distribute required advertisement information on a user-by-user basis.
(7) The advertisement viewing history information is that storing information of whether the vehicle-mounted device 10 has received the distributed information or not, information indicating whether the received advertisement information has been displayed on the display unit 1e or not, and information indicating whether or not the user has stopped the target vehicle C at a store introduced by the advertisement information on the basis of the displayed information (hereinafter referred as "target store"). The information indicating whether received or not and the information indicating whether displayed or not includes information on time.

Reception of this information of (7) by the center apparatus 30 allows the center apparatus 30 to determine that the distributed advertisement information has been viewed by the user and thereby the user has made a stop at the target store.

The uplink information stored in the uplink information storage area M, which has been described, is transmitted to the center apparatus 30. More specifically, the uplink information is temporarily stored in the management server 30a, and subsequently transmitted to the customer management server 30b.

The customer management server 30b then produces benefit notifying information on the basis of the uplink information and a prescribed condition preliminary stored in the customer management server 30b. Here, the benefit notifying information is for notifying the user of the benefit to be given for viewing the advertisement.

The customer management server 30b transmits the produced benefit notifying information to the vehicle-mounted device 10. The vehicle-mounted device 10 displays the benefit notifying information on the display unit 1e.

Referring again to FIG. 3, the ETC processing unit 3e exchanges information required to balance a bill with a toll gate via wireless communication in the 5.8 GHz band. The required information includes information about the target vehicle C, an entrance tollgate, an exit tollgate, and a toll. The ETC processing unit 3e reads and writes the information from and into an IC card inserted in the IC card I/F unit 3f.

The IC card I/F unit 3f stores the IC card preliminarily stored with card-specific information in a manner capable of insertion and extraction. The ETC processing unit 3e acquires the information stored in the IC card via the IC card I/F unit 3f with respect to information required when using ETC. The history of tolls and the like can be stored in the IC card. The ETC processing unit 3e writes the history via the IC card I/F unit 3f.

The control unit 4 controls the car navigation unit 1, the VICS module 2 and the DSRC unit 3, which have been described above, in a centralized manner. For example, the control unit 4 instructs the DSRC control unit 3a to store the destination information, the via-point information and the like produced by the car navigation unit 1 in the storage unit 3c. When the DSRC unit 3 initiates the DSRC connection with the roadside apparatus 20, the control unit 4 notifies initiation of communication by transmitting a connection signal to the car navigation unit 1.

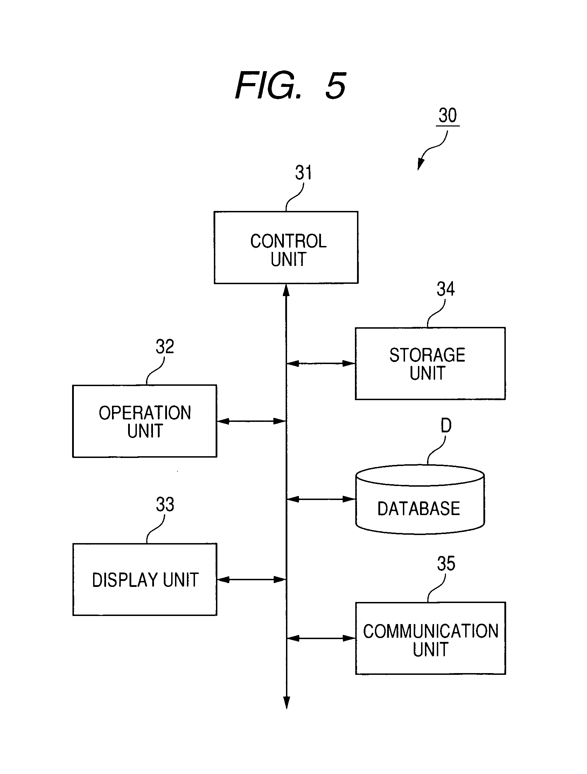

FIG. 5 illustrates the internal configuration of the center apparatus 30.

Since the management server 30a and the customer management server 30b have the similar configuration, the customer management server 30b will here be described as a typical case.

The customer management server 30b comprises a control unit 31, an operation unit 32, a display unit 33, a storage unit 34 and a communication unit 35.

The control unit 31 comprises a CPU (Central Processing Unit) and a RAM (Random Access Memory), and loads prescribed programs stored in the storage unit 34 into the RAM and controls processing operations in a centralized manner by cooperation with the programs.

The control unit 31 produces the benefit notifying information by cooperation with a prescribed program stored in the storage unit 34, and transmits the information to the vehicle-mounted device 10.

The operation unit 32 comprises a keyboard including numeric keys, character keys and function keys, and a mouse, and outputs operation signals according to the operated keys to the control unit 31.

The display unit 33 comprises an LCD (Liquid Crystal Display), and displays various pieces of display information, such as an operation screen, according to display control by the control unit 31. The display unit 33 may adopt a mode configured into an integrated touch panel with the operation unit 32.

The storage unit 34 includes various programs, such as control programs to be executed by the control unit 31 and maintenance notification information producing program, in addition to system programs; stores various parameters required to execute the respective programs; and stores processed data and the like after execution.

The database D is of uplink information with respect to each vehicle-mounted device 10 and information of a customer list. The database D associates the pieces of uplink information with the respective customers on the customer list.

The communication unit 35 comprises an interface for communication such as a network interface card and a modem.

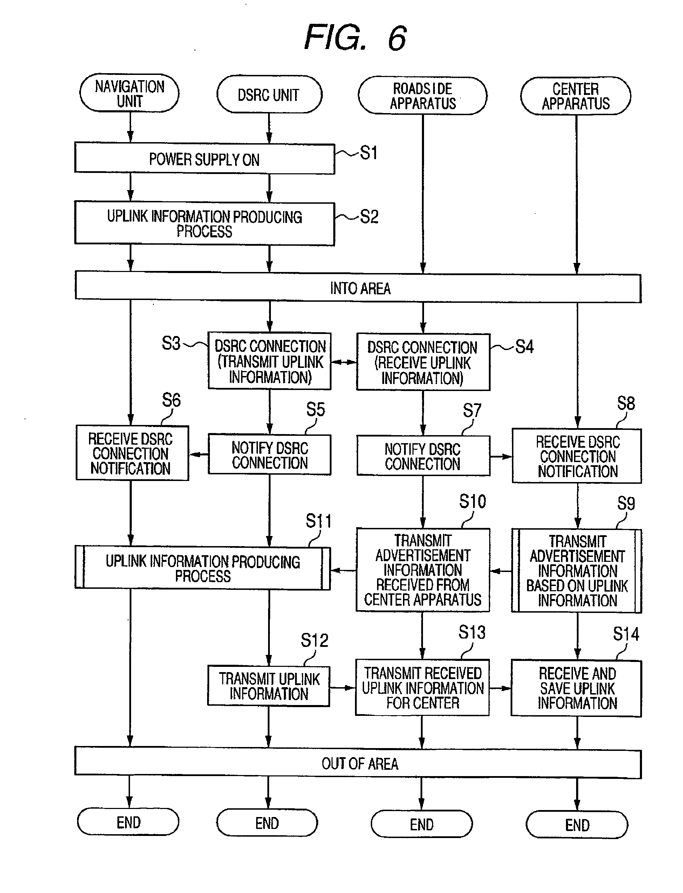

Next, processing operation of the entire advertisement distributing system will be described with reference to FIG. 6.

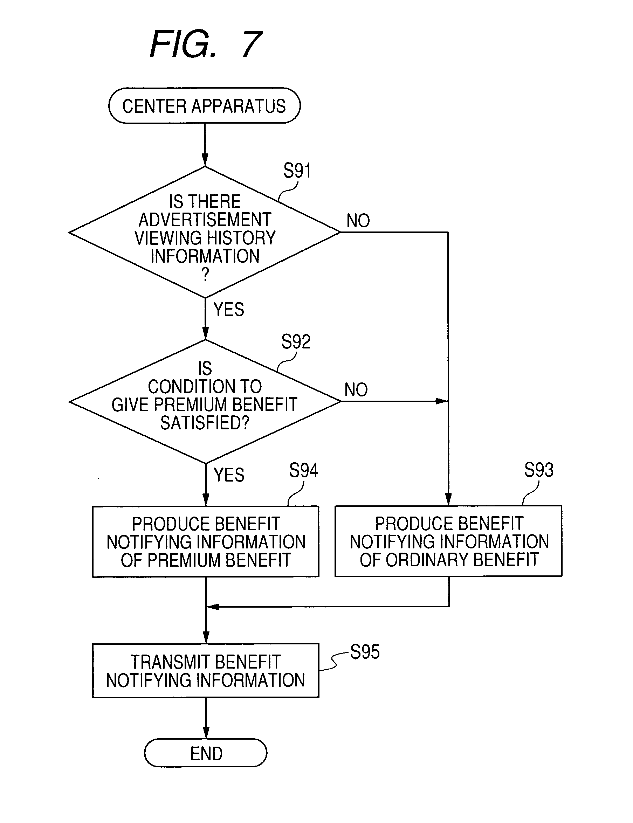

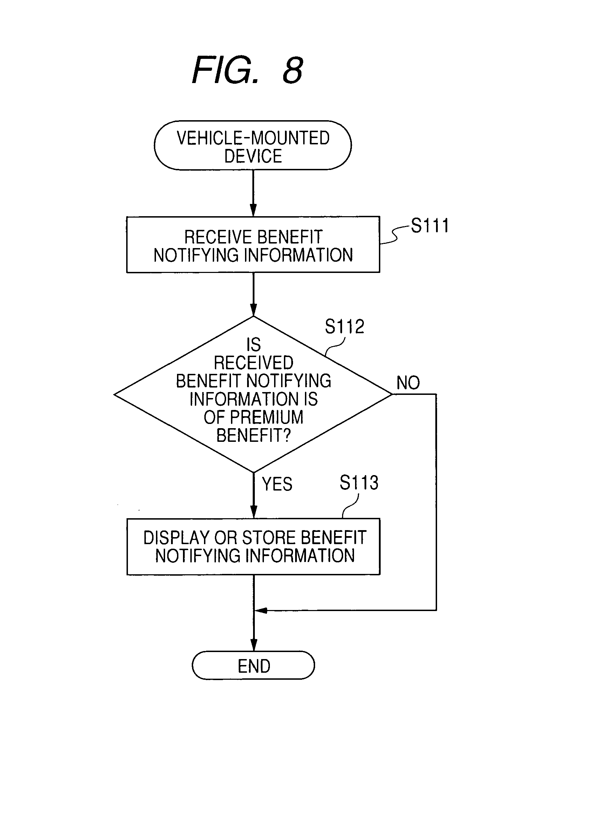

The process shown in FIG. 6 shows a case where the vehicle-mounted device 10 receives the advertisement information on the target store for the first time at a location other than the target store. On the other hand, FIGS. 7 and 8, which will be described later, shows a process performed by the vehicle-mounted device 10 and the center apparatus 30 after the user drives the target vehicle C near the target store.

As shown in FIG. 6, when the power supply of the vehicle-mounted device 10 is turned ON (step S1), the car navigation unit 1 and the DSRC unit 3 performs a process of storing the uplink information in the uplink information storage area M (step S2). The uplink information produced here is specifically (5) the previous stopover point information (see FIG. 4). Information capable of being produced even not in a DSRC-connectable area other than information of (5) is successively produced by the control unit 4 and stored in the uplink information storage area M. The stored information is saved as the uplink information for a prescribed time period.

When the vehicle-mounted device 10 (target vehicle C) enters into an area capable of communicating with the roadside apparatus 20, the DSRC unit 13 initiates DSRC connection with the roadside apparatus 20. Here, the uplink information preliminarily stored by a process in step S2 is transmitted to the roadside apparatus 20 (step S3), and the roadside apparatus 20 receives the information (step S4).

The control unit 4 notifies the car navigation unit 1 of initiation of the DSRC connection (step S5), and the car navigation unit 1 receives the notification (step S6).

On the other hand, the roadside apparatus 20 notifies the center apparatus 30 of the initiation of the DSRC connection and transmits the uplink information to the center apparatus 30 (step S7).

The center apparatus 30 receives the DSRC connection notification and the uplink information transmitted from the roadside apparatus 20 via the network N (step S8).

The center apparatus 30 transmits a piece of advertisement information determined to be required among the pieces of advertisement information stored in the center apparatus 30 to roadside apparatus 20 on the basis of the received uplink information (step S9). For example, the center apparatus 30 transmits various pieces of advertisement information which fits the user's favorite to the roadside apparatus 20 on the basis of the information of (1), (6) and the like included in the uplink information. More specifically, the center apparatus 30 transmits the advertisement information about around the destination to the roadside apparatus 20 on the basis of (2) the destination information.

The center apparatus 30 receives location information of the roadside apparatus 20, and transmits the advertisement information about around the current location of the target vehicle C to the vehicle-mounted device 10.

In step S9, the center apparatus 30 performs a process of producing benefit notifying information on the basis of (7) the advertisement viewing history information included in the received uplink information. This process will be described in FIG. 7.

The roadside apparatus 20 receives the advertisement information transmitted from the center apparatus 30, and distributes the received advertisement information to the vehicle-mounted device 10 (step S10).

The vehicle-mounted device 10 performs a process of displaying the distributed advertisement information on the display unit 1e. Here, the vehicle-mounted device 10 produces the uplink information where a history of receiving the advertisement information and a history of displaying the information are included in the advertisement viewing history information (step S11).

The production of the uplink information including (7) the advertisement viewing history information will hereinafter be described.

When receiving the advertisement information, the control unit 4 includes a history indicating the reception in (7) the advertisement viewing history information, and stores it in the uplink information storage area M.

When displaying the received advertisement information on the display unit 1e, the control unit 4 includes a history indicating the display in (7) the advertisement viewing history information, and stores it in the uplink information storage area M. The information indicating the display includes the time and period when the advertisement information has been displayed.

It can be presumed that the user has viewed the advertisement information from the history of the display.

When the user drives the target vehicle C toward the target store as the destination, the control unit 4 stores (5) the previous stopover point information, which indicates that the target vehicle C has stopped before reaching the target store, in the uplink information storage area M. When the target vehicle C stops at the target store, it can be presumed that the user has visited the target store because of viewing the advertisement information on the basis of the current location information and the aforementioned history information indicating the display. The control unit 4 includes the history of the stop of the target vehicle C at the target store, or information according to which it can be presumed whether the user has visited the target store or not, in (7) the advertisement viewing history information, and stores it in the uplink information storage area M. The uplink information including (7) the advertisement viewing history information is thus produced as described above.

The control unit 4 assigns the user ID to the uplink information produced when the DSRC connection has been established, and transmits it to the roadside apparatus (step S 12).

The roadside apparatus 20 receives the uplink information transmitted from the vehicle-mounted device 10, and transmits it to the center apparatus 30 (step S13).

The center apparatus 30 receives the uplink information transmitted from the roadside apparatus 20, and saves the information in the database D (step S14).

When the vehicle-mounted device 10 (target vehicle C) moves out of the DSRC-connectable area of the roadside apparatus 20, the DSRC connection between the vehicle-mounted device 10 and roadside apparatus 20 is terminated, and this process is finished.

Next, a process performed by the vehicle-mounted device 10 and the center apparatus 30 when the target vehicle C enters into a DSRC-connectable area around the target store will be described with reference to FIGS. 7 and 8. The process having already described in FIG. 6 will be omitted from the description below.

A process that the center apparatus 30 transmits benefit notifying information on the basis of (7) the advertisement viewing history information included in the uplink information will be described with reference to FIG. 7. The process shown in FIG. 7 is based on a premise that the processes in steps S1 to S8 in FIG. 6 have been performed, and is performed in addition to the process in step S9 in FIG. 6.

The center apparatus 30 determines whether or not there is the history that the advertisement introducing the target store in (7) the advertisement viewing history information included in the received uplink information has been viewed (step S91).

When the center apparatus 30 determined that there is no history that the advertisement introducing the target store in (7) the advertisement viewing history information has been viewed (step S91; NO), the center apparatus 30 produces benefit notifying information of an ordinary benefit (step S93).

Here, the ordinary benefit means, for example, an ordinary point or a discount rate uniformly given to customers coming to the target store without viewing the advertisement of the target store. In contrast to that, what is given to customers coming to the store after viewing the advertisement of the target store is a premium benefit. The premium benefit, whose contents for example include 2 times of the ordinary point or 1.5 times of the ordinary discount rate and may arbitrarily be set by the center apparatus 30, will be described later.

On the other hand, when the center apparatus 30 determines that there is the history that the advertisement introducing the target store has been viewed (step S91; YES), the center apparatus 30 determines whether a condition to give the premium benefit is satisfied or not (step S92).

The condition to give the premium benefit may arbitrarily set by the center apparatus 30. For example, the condition is what defines an expiration date or a valid driving distance. More specifically, if the condition to give the premium benefit defines the expiration date one month after viewing the advertisement, the center apparatus 30 calculates a difference between the date when the user has viewed the advertisement and the present date from the received (7) advertisement viewing history information. The center apparatus 30 then determines whether the premium benefit is to be given for viewing the advertisement or not, according to whether the difference is at least one month or not. The center apparatus 30 determines on the valid driving distance in an analogous manner.

When the center apparatus 30 determines that the condition to give the premium benefit to the user is not satisfied (step S92; NO), the center apparatus 30 produces the benefit notifying information of ordinary benefit as described above (step S93).

On the other hand, when the center apparatus 30 determines that the condition to give the premium benefit to the user is satisfied (step S92; YES), the center apparatus 30 produces the benefit notifying information of premium benefit (step S95).

After producing the benefit notifying information of any one of the ordinary benefit or the premium benefit, the center apparatus 30 transmits the produced benefit notifying information to the roadside apparatus 20 (step S94), and finishes this process.

Subsequently, the roadside apparatus 20 transmits the received benefit notifying information to the vehicle-mounted device 10. A process in the vehicle-mounted device 10 having been received the benefit notifying information will hereinafter be described.

FIG. 8 shows the processing operation of the vehicle-mounted device 10 having been received the benefit notifying information. The process shown in FIG. 8 is based on a premise that the processes in steps S1 to S10 in FIG. 6 have been performed, and is performed in addition to the process in step S11 in FIG. 6.

When receiving the benefit notifying information (step S111), the vehicle-mounted device 10 determines whether the received benefit notifying information is of the premium benefit or not (step S112).

When the vehicle-mounted device 10 determines that the received benefit notifying information is not of the premium benefit (step S112; NO), the vehicle-mounted device 10 finishes this process.

On the other hand the vehicle-mounted device 10 determines that the received benefit notifying information is of the premium benefit (step S112; YES), the vehicle-mounted device 10 displays the benefit notifying information on the display unit 1e or stores it in the storage unit 3c (step S 113), and finishes this process.

The benefit notifying information may be displayed or stored even if the information is of the ordinary benefit instead of the premium benefit. The benefit contents can be stored in a memory medium such as an IC card.

The benefit notifying information, which the vehicle-mounted device 10 displays on the display unit 1e or stores in the storage unit 3c, may be a QR code (registered trademark) or discrimination number for discriminating the vehicle-mounted device 10. If the information is the QR code, the user for example reads the QR code displayed on the display unit 1e using a mobile terminal or the like, and presents the read data at the target store, thereby receives a prescribed benefit. Among the benefits, there are a discount, presentation of a small gift or a prize, or addition of points to the card.

As described above, according to this embodiment, the center apparatus 30 can produce the benefit notifying information on the basis of uplink information including (7) the advertisement viewing history information transmitted from the vehicle-mounted device 10. The center apparatus 30 can distribute the produced benefit notifying information to the vehicle-mounted device 10. The vehicle-mounted device 10 can receive this information.

The vehicle-mounted device 10 can display the received benefit notifying information on the display unit 1e. Accordingly, the user can recognize that the benefit is given by viewing the advertisement.

The center apparatus 30 can select any one of the pieces of benefit notifying information of ordinary benefit and the premium benefit, which is to be transmitted to the vehicle-mounted device 10, on the basis of the condition to give the premium benefit. Accordingly, the target store providing the benefit may specify that the benefit is not necessarily given to the user having viewed the advertisement without limitation.

The QR code indicating the benefit contents may be included in the benefit notifying information, and displayed on the display unit 1e or stored in the storage unit 3c. Accordingly, the user can easily receive the benefit without any need of complicated procedures.

If the discrimination number for discriminating the vehicle-mounted device 10 is included in the benefit notifying information and presented at the target store, the user can receive the benefit without any need of complicated procedures, as with the QR code.

## Claims

1. An advertisement distributing system in which a vehicle-mounted device is mounted on each of one or more vehicles and connected to a center apparatus for distributing advertisement information, via a roadside apparatus in a manner capable of making wireless communication,
wherein the vehicle-mounted device comprises:
first communication means for communicating with the center apparatus via the roadside apparatus; first storage means for storing advertisement viewing history information as to whether the advertisement information has been viewed or not; and first control means for reading the advertisement viewing history information from the first storage means and causing the first communication means to transmit the information to the center apparatus, and
wherein the center apparatus comprises:
second communication means for communicating with the vehicle-mounted device via the roadside apparatus; second storage means for storing the advertisement viewing history information in association with each vehicle-mounted device mounted on the vehicle; and second control means for producing benefit notifying information for notifying a benefit to be given for viewing the advertisement information on the basis of the advertisement viewing history information read from the second storage means and causing the second communication means to transmit the produced benefit notifying information to the vehicle-mounted device.

2. The advertisement distributing system according to claim 1, wherein the vehicle-mounted device comprises display means, and the first control means causes the display means to display the benefit notifying information transmitted from the center apparatus.

3. The advertisement distributing system according to claim 1 or 2, wherein the second control means determines benefit contents of the benefit notifying information according to whether the advertisement information has been viewed or not included in the advertisement viewing history information.

4. The advertisement distributing system according to any one of claims 1 or 2, wherein the second control means includes ciphered information indicating benefit contents in the benefit notifying information.

5. The advertisement distributing system according to any one of claims 1 or 2, wherein the second control means includes a discrimination number for discriminating the vehicle-mounted device in the benefit notifying information.

6. A vehicle-mounted device connected to a center apparatus for distributing advertisement information, via a roadside apparatus in a manner capable of making wireless communication, the vehicle-mounted device comprising:
communication means for communicating with the center apparatus via the roadside apparatus;
storage means for storing advertisement viewing history information as to whether the advertisement information has been viewed or not; and
control means for reading the advertisement viewing history information from the storage means and causing the communication means to transmit the information to the center apparatus.
